(19) Europäisches Patentamt / European Patent Office / Office européen des brevets

(11) **EP 1 729 148 B1**

(12) **EUROPÄISCHE PATENTSCHRIFT**

(45) Veröffentlichungstag und Bekanntmachung des Hinweises auf die Patenterteilung:
**06.01.2010 Patentblatt 2010/01**

(51) Int Cl.:
***G01T 1/204*** *(2006.01)*    ***G01T 7/02*** *(2006.01)*

(21) Anmeldenummer: **06010138.3**

(22) Anmeldetag: **17.05.2006**

(54) **Vorrichtung zum Nachweis radioaktiver Strahlung mit Szintillationsmessungen**

Device for detecting radioactive radiation with scintillation measurements

Dispositif pour la détection du rayonnement radioactif avec des mesures de scintillation

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **02.06.2005 DE 102005025479**

(43) Veröffentlichungstag der Anmeldung:
**06.12.2006 Patentblatt 2006/49**

(73) Patentinhaber: **Berthold Technologies GmbH & Co. KG**
**75323 Bad Wildbad (DE)**

(72) Erfinder:
- **Berthold, Fritz, Dr.**
  **75173 Pforzheim (DE)**
- **Reuter, Wilfried, Dr.**
  **75334 Straubenhardt (DE)**
- **Hafner, Klaus**
  **04157 Leipzig (DE)**

(74) Vertreter: **Frank, Gerhard et al**
**Patentanwälte,**
**Mayer Frank Schön,**
**Schwarzwaldstrasse 1A**
**75173 Pforzheim (DE)**

(56) Entgegenhaltungen:
US-A- 3 723 736    US-A- 4 853 945
US-A- 4 918 310    US-A- 5 061 853
US-A- 5 144 136    US-B1- 6 333 502

- SALOMON M ED - INSTITUTE OF ELECTRICAL AND ELECTRONICS ENGINEERS: "New measurements of scintillating fibers coupled to multianode photomultipliers" PROCEEDINGS OF THE NUCLEAR SCIENCE SYMPOSIUM AND MEDICAL IMAGING CONFERENCE. SANTA FE, NOV. 2 - 9, 1991, NEW YORK, IEEE, US, Bd. VOL. 1, 2. November 1991 (1991-11-02), Seiten 346-348, XP010057901 ISBN: 0-7803-0513-2
- DEL GUERRA A ET AL: "X-Y Position Readout of a YAP:Ce Crystal Matrix Using Wavelength-Shifting Fibers" IEEE TRANSACTIONS ON NUCLEAR SCIENCE, IEEE SERVICE CENTER, NEW YORK, NY, US, Bd. 48, Nr. 4, August 2001 (2001-08), Seiten 1108-1113, XP011042084 ISSN: 0018-9499
- MURAMATSU ET AL: "End-window counting of tritium radioactivity by scintillation phosphor combined with prismatic light guide" NUCLEAR INSTRUMENTS AND METHODS, Bd. 52, 1976, Seiten 148-152,

## Beschreibung

Technischer Hintergrund

Die Erfindung betrifft eine Vorrichtung gemäß dem Oberbegriff des Patentanspruchs 1.

Ein grundsätzliches Problem bei Radioaktivitätsnachweisen mittels der Szintillatortechnik besteht darin, tatsächliche Zählereignisse, d.h. auf einen Photodetektor treffende Photonen, die von dem nachzuweisenden Strahlungsereignis herrühren, zu unterscheiden von solchen Photonen, die durch andere Mechanismen entstehen (thermisches Rauschen des Photonendetektors, Chemilumineszenz- und Photolumineszenzeffekte, kosmische Strahlung), und dadurch zu Störimpulsen führen.

Stand der Technik

Ein gattungsgemäßes Gerät, das unter der Handelsbezeichnung "Microbeta" von Wallac Oy/Perkin Ellmer vertrieben wird (US 5,061,853), benutzt zur Unterscheidung zwischen Zählereignissen und Störimpulsen zwei Photomultiplier, von denen einer über der Austrittsöffnung der Aufnahmevertiefungen einer Mikroplatte angeordnet ist und somit die nach oben austretende Strahlung misst, wogegen der zweite Photomultiplier unmittelbar dem ersten Photomultiplier gegenüberliegt und die Strahlung misst, die ihn durch den durchsichtigen Boden der Mikroplatte erreicht.

Dieses Verfahren beruht darauf, dass von jedem Strahlungsereignis im Szintillator eine Vielzahl von Photonen ausgelöst werden, die sich isotrop ausbreiten, so dass davon ausgegangen werden kann, dass die von einem derart erzeugten Strahlungsereignis ausgelösten Photonen praktisch gleichzeitig von beiden Photomultipliern registriert werden. Folglich werden die beiden Photomultiplier in Koinzidenz betrieben, wodurch elektronisch die "Gleichzeitigkeitsbedingung" insoweit umgesetzt wird, als dass Photonen, die von beiden Photomultipliern nachgewiesen werden, dann als gleichzeitig und damit einem nachzuweisenden Strahlungsereignis zuordenbar betrachtet werden, wenn sie in der Koinzidenzstufe innerhalb eines vorgebbaren Zeitfensters mit einem typischen Wert von 20 ns eintreffen.

Diese Lösung arbeitet zuverlässig, hat jedoch den Nachteil, dass nur spezielle Mikroplatten mit durchlässigem Boden verwendet werden können, so dass wegen der Erfordernis der lichtdichten Abschirmung im übrigen Bereich der Aufnahmevertiefung zwei Materialien eingesetzt werden müssen; die Fertigung der Mikroplatte ist daher nicht aus einem Material möglich und somit relativ kostenaufwendig.

Eine Alternativlösung ist seitens der Firma Packard Instrument unter der Marke "TopCount" bekannt geworden (EP 0 425 767 A1), die mit lediglich einem, senkrecht über der Austrittsfläche der Aufnahmevertiefungen einer Mikroplatte angeordneten Photomultiplier auskommt, so dass hier keine Mikroplatten mit transparentem Boden benötigt werden.

Das hier verwendete Auswerteprinzip beruht folglich nicht auf Koinzidenzverfahren, sondern gewinnt aus der Impulsfolge der Ausgangssignale des Photomultipliers die Information zur Entscheidung, ob es sich um ein nachzuweisendes Strahlungsereignis oder um eines der oben angesprochenen Störereignisse handelt. Dazu wird durch einen ersten registrierten Impuls ein Gate für z.B. 200 ns geöffnet und die in diesem Zeitfenster auftretenden weiteren Impulse gewählt. Liegt deren Zahl über einem vorgegebenen Wert von z.B. drei, so werden diese Impulse als nachzuweisendes Strahlungsereignis gewertet.

Diese Lösung hat zwei Nachteile:

Erstens benötigt man Photomultiplier ausgesuchter Qualität, damit nicht durch im Photomultiplier auftretende Nachimpulse nachzuweisende Strahlungsereignisse vorgetäuscht werden.

Zweitens können bei diesem Verfahren nur Szintillatoren mit besonders langen Abklingzeiten von über 50 ns verwendet werden, während die üblichen Flüssig- und Plastikszintillatoren Abklingzeiten von unter 10 ns haben.

Beides, extrem hochwertige Photomultiplier einerseits und spezielle Szintillatoren zum Nachweis andererseits, verteuern diese Messanordnung.

In der gattungsbildenden US 5,144,136 ist eine Vorrichtung zur Szintillationsmessung beschrieben, bei dem sich die zu messenden Proben in Aufnahmebereichen einer Mikroplatte befinden. Als Szintillator dient die Flüssigkeit der Proben selbst. Es sind zwei in Koinzidenz geschaltete Photomultiplier vorgesehen, welche bei Szintillationsmessungen jeweils über einen Lichtleiter an die Probe gekoppelt sind.

Durch NUCLEAR INSTRUMENTS AND METHODS 52 (1967) 148-152 (Muramatsu et. al.) ist ein Gerät zur Messung der Tritium-Radioaktivität mittels Szintillationsmessung bekannt geworden. Hier befindet sich oberhalb der zu messenden Tritium-Probe ein scheibenförmiger Phosphor-Szintillator an welchen sich die lange Seite eines Prismas anschließt. Das vom Szintillator in das Prisma eingestrahlte Licht wird von diesem auf zwei Photomultiplier "verteilt", welche sich an die kurzen Seiten des Prismas anschließen. Aufgrund der Geometrie wäre eine solche Vorrichtung zum Einsatz mit Mikroplatten wohl nicht geeignet.

Darstellung der Erfindung

Es ist Aufgabe der Erfindung, ausgehend vom Koinzidenz-Nachweisprinzip die gattungsgemäße Anordnung zu verbessern.

Erfindungsgemäß wird diese Aufgabe gemäß den Merkmalen des Patentanspruchs 1 gelöst.

Der Grundgedanke der Erfindung ist somit darin zu sehen, unter Beibehaltung des Koinzidenzprinzips beide Photodetektoren, in der Regel Photomultiplier, über den Proben anzuordnen, ohne dass diese sich gegenseitig im Nachweis "ihrer" Photonen behindern oder gegenseitig stören und dennoch die Probe direkt "sehen". Dazu werden die beiden Photomultiplier so angeordnet, dass deren Photokathoden die Probe etwa mit gleichem Raumwinkel direkt sehen. Die beiden Photomultiplier können dabei parallel zueinander angeordnet sein, aber auch gegeneinander geneigt, wobei ihre Längsachsen vorzugsweise in einer vertikalen Ebene liegen.

Weiterhin sorgt eine Lichtabschirmung zwischen den beiden Photokathoden dafür, dass diese sich gegenseitig nicht sehen können. Dadurch wird der bei konventionell aufgebauten Flüssigszintillationzählern beobachtete "Crosstalk", der den Nulleffekt erhöht, hier weitgehend vollständig ausgeschaltet.

Die erfindungsgemäße Vorrichtung ist somit konstruktiv einfach, wartungsfreundlich und räumlich kompakt; durch die vollständige Anordnung der Vorrichtung oberhalb der Aufnahmebereiche für die Probe, beispielsweise einer Mikroplatte, kann auch der Bereich unterhalb der Mikroplatte für Zusatzeinrichtungen wie Horizontal-Verschiebeeinrichtungen oder ähnliches frei bleiben, die dann auch ohne Rücksicht auf die Photomultiplier ihrerseits konstruktiv optimiert werden können.

Kurze Beschreibung der Zeichnungen

Zwei Ausführungsbeispiele der erfindungsgemäßen Vorrichtung werden anhand von Zeichnungen näher erläutert, es zeigen:

Figur 1: Eine perspektivische Gesamtansicht eines ersten Ausführungsbeispiels der Vorrichtung,

Figur 2: einen Längsschnitt,

Figur 3: eine Unteraufsicht auf die Vorrichtung,

Figur 4: eine schematische Darstellung zur Optimierung der geometrischen Parameter des Reflektors,

Figur 5: eine perspektivische Gesamtansicht eines zweiten Ausführungsbeispiels der Vorrichtung,

Figur 6a: Eine Ausführung des Reflektors beim zweiten Ausführungsbeispiel,

Figur 7: Ein Blockschaltbild einer ersten Auswerteeinrichtung mit Berücksichtigung der Impulshöhe,

Figur 8: Ein Blockschaltbild einer zweiten Auswerteeinrichtung ohne Berücksichtigung der Impulshöhe.

Beschreibung der Ausführungsbeispiele

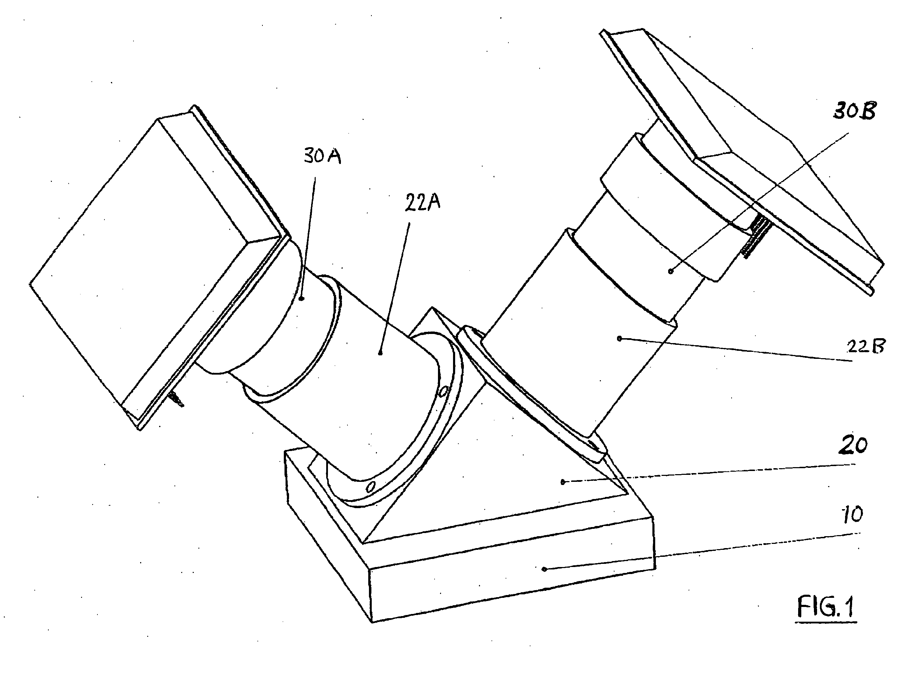

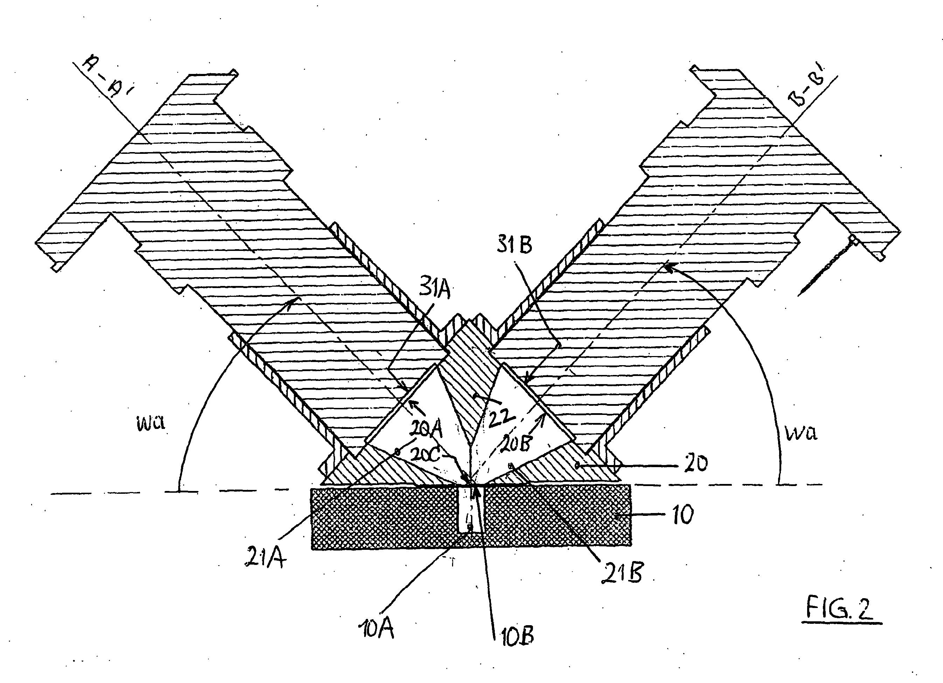

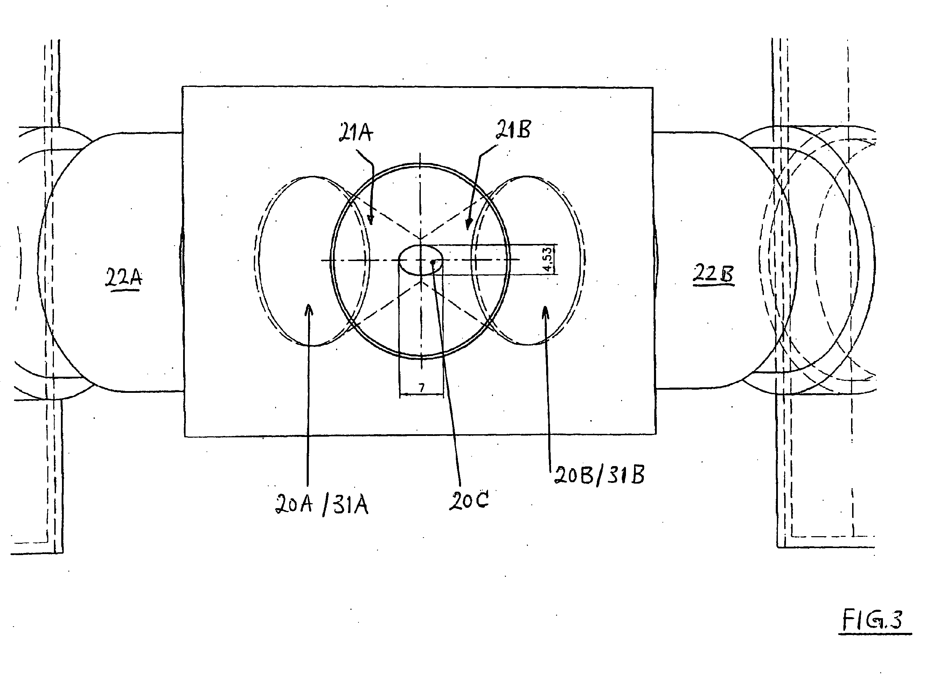

Die Vorrichtung gemäß dem ersten Ausführungsbeispiel (Figuren 1-4) besteht aus zwei in Koinzidenz geschalteten Photomultipliern 30A,30B mit Eintrittsfenstern 31A,31B, die in Halteflanschen 22A,22B eines Reflektors 20 eingesetzt sind, der auf seiner Oberseite zwei Photonenaustrittsfenster 20A und 20B und auf seiner Unterseite ein Photoneneintrittsfenster 20C aufweist, das einer Austrittsöffnung 10B der Mikroplatte 10 als Aufnahmebereich einer Probe gegenüberliegt. Statt einer Mikroplatte können auch andere Probenträger mit geeignetem Rastermaß, z.B. mit Szintillator beschichtete oder getränkte Filtermatten als Aufnahmebereiche dienen und mit Hilfe einfacher Adaptervorrichtungen gemessen werden.

Der Reflektor 20 weist zwischen den Photonenaustrittsfenstern 20A,20B und dem Photoneneintrittsfenster 20C kegelförmige Kanäle 21A,21B auf, so dass er als optischer Adapter der Eintrittsfenster 31A,31B der beiden Photomultiplier 30A,30B an die gemeinsame Austrittsöffnung 10B der Aufnahmevertiefung 10A der Mikroplatte 10 dient.

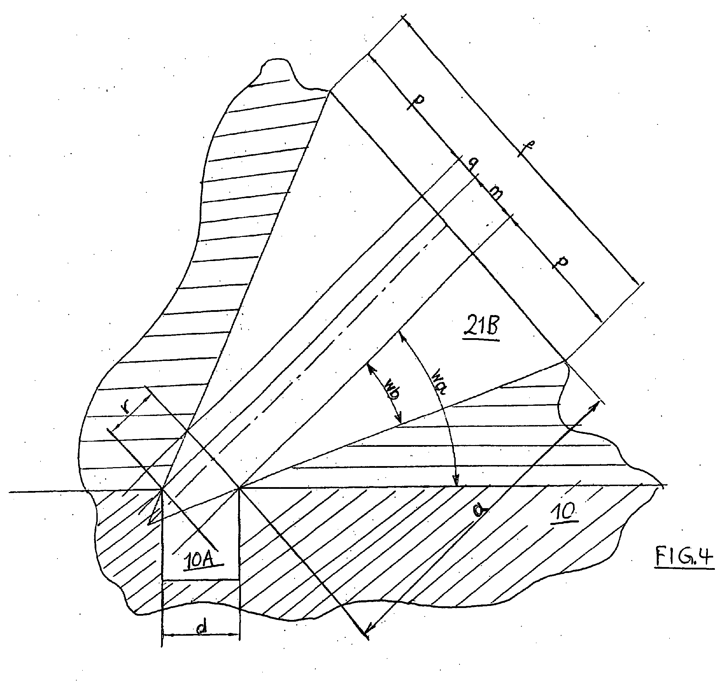

Wie in Figur 4 schematisch dargestellt, bestehen zwischen den vorgegebenen geometrischen Parametern, dem Durchmesser des Eintrittsfensters der Photomultiplier, dem Durchmesser der Austrittsöffnung der Aufnahmevertiefung 10A und der wählbaren Kegelgestalt der Kanäle 21A,21B mathematische Zusammenhänge derart, dass sich sowohl der Öffnungswinkel wb des Kanalkegels, als auch der Neigungswinkel wa der Längsachse A-A, B-B jedes Kanals gegenüber der Längsachse C-C der Aufnahmevertiefung 10A so optimieren lassen, dass einerseits jeder Photomultiplier praktisch die vollständige Austrittsöffnung 10B der Aufnahmevertiefung 10A "sieht", andererseits von den reflektierenden Wandungen der Kanäle aber keine optischgeometrische Möglichkeit besteht, dass einmal ein im "Messbereich" eines der Photomultiplier befindliches Photon in den Nachweisbereich des anderen Photomultipliers reflektiert wird, d.h., dass kein Übersprechen stattfindet.

Unter diesen Vorgaben lässt sich der Winkel wb des Kanals berechnen:

Mit den in Figur 4 dargestellten Bedeutungen der Parameter p(a) und a berechnet sich p zu

$$p\,(a) = (a/r \times (f - m))/(1 + 2a/r)$$

woraus sich ergibt

$$wb = \arctan p/a$$

Der Öffnungswinkel wb ist somit eine Funktion der gewählten Länge a des Kegels. Damit lassen sich je nach gewünschter Außengeometrie verschieden geformte Reflektoren darstellen.

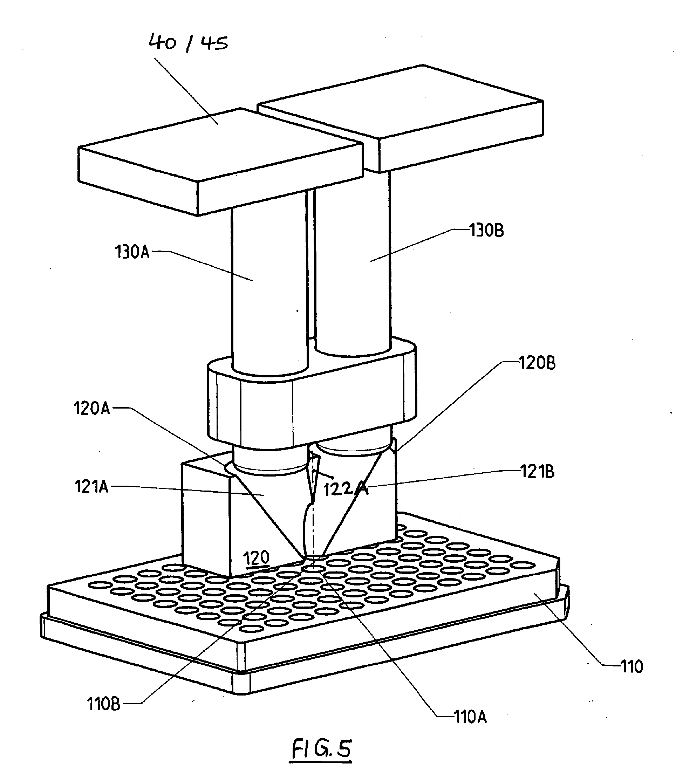

Beim zweiten Ausführungsbeispiel (Figuren 5-6a,b) sind zwei in Koinzidenz geschaltete Photomultiplier 130A,130B parallel nebeneinander über einem Reflektor 120 angeordnet, der auf seiner Oberseite zwei Photonenaustrittsfenster 120A und 120B und auf seiner Unterseite ein Photoneneintrittsfenster 120C aufweist, das einer Austrittsöffnung 110B der Mikroplatte 110 gegenüberliegt.

Der Reflektor 120 weist zwischen den Photonenaustrittsfenstern 120A,120B und dem Photoneneintrittsfenster 120C zwei Kanäle auf, deren geometrische Ausgestaltung unterschiedlich gewählt sein kann.

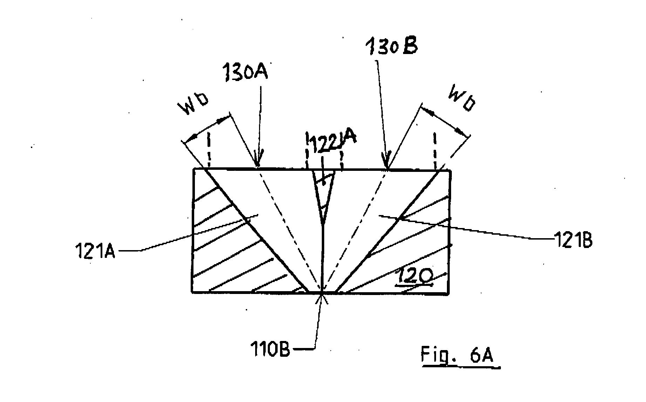

Bei der Ausführung nach Figur 6a sind die Kanäle 121A,121B kegelförmig ausgestaltet, mit einer keilähnlichen Trennwand 122A in ihrem oberen Bereich.

Auch beim zweiten Ausführungsbeispiel ist eine Optimierung derart möglich, dass einerseits jeder der beiden Photomultiplier 130A,130B praktisch die vollständige Austrittsöffnung 110B der Aufnahmevertiefung 110A "sieht", andererseits insbesondere durch die Trennwände von den reflektierenden Wandungen der beiden Kanäle aber kein Übersprecheffekt ausgeht.

Anstelle separater Photomultiplier, die beispielsweise vom Typ 9107B (electron tubes, Ruislip, UK) sein können, ist es auch denkbar, nur einen Photomultiplier Typ R2486-02 (Hamamatsu, Sunayama-cho, Japan) einzusetzen, der räumlich getrennte Zählbereiche aufweist, die lokal auswertbar sind. Damit können Photokathodenbereiche definiert werden, welche zur Vermeidung von Übersprechen mit mechanischen Trennwänden und Reflektoren an die Messprobe angekoppelt werden, und deren Impulse in einer Koinzidenzstufe ausgewertet werden.

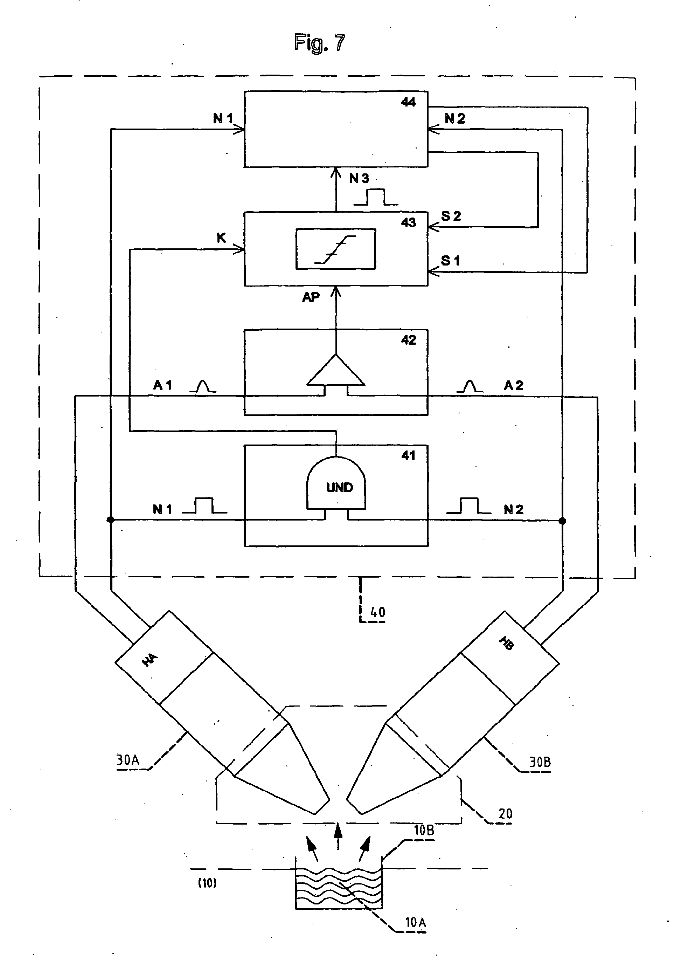

Figur 7 zeigt ein Ausführungsbeispiel einer Schaltung zur Auswertung der von den beiden Photomultipliern gelieferten Impulse; diese Auswerteschaltung 40 ist in Figur 7 für gegeneinander geneigte Photomultiplier 30A,30B dargestellt, kann aber auch für parallel angeordnete Photomultiplier 130A,130B gemäß Figur 5,6a, 6b verwendet werden.

Jeder der Photomultiplier 30A,30B ist mit einer Hochspannungseinheit HA,HB mit Spannungsteiler und einem schnellen Vorverstärker mit nachgeschaltetem Diskriminator zur Gewinnung von Impulsen einheitlicher Impulshöhe (Normimpulse) ausgerüstet. Die Photomultiplier werden als Single-Photon Counter betrieben, d.h., an einem durch geeignete Einstellung der Hochspannung gefundenen Arbeitspunkt innerhalb des Plateaus für Einzelphotonen. Dadurch erhält man nicht nur stabile Arbeitsbedingungen und höchste Empfindlichkeit für Szintillationsmessungen, sondern auch optimale Bedingungen für Lumineszenzmessungen, bei denen direkt, ohne Koinzidenzstufe, gemessen wird.

Sowohl die Normimpulse N1,N2, als auch die analogen vorverstärkten Signale A1,A2 werden der Auswerteschaltung 40 zugeführt.

Die Auswerteschaltung 40 ist wie folgt aufgebaut:

Die Normimpulse N1,N2 werden einer Koinzidenzstufe 41 mit einstellbarer Koinzidenzauflösungszeit, welche von der Abklingzeit des Szintillators abhängt, zugeführt, die bei Erfüllung dieser Koinzidenzbedingung ein Koinzidenzsignal K an einen Steuereingang eines nachfolgenden Einkanaldiskriminators 43 gibt. Beispielsweise kann für einen schnellen Flüssigszintillator eine Koinzidenzauflösungszeit von 20 ns, dagegen für Feststoffszintillatoren von 100-200 ns gewählt werden.

Die analogen Signale A1, A2 werden in einer Summierstufe 42 addiert und das analoge Summensignal AP wird auf den Zähleingang des Einkanaldiskriminators 43 gegeben.

Die untere Schwelle S1 und die obere Schwelle S2 des Einkanaldiskriminators 43 werden entsprechend dem zu messenden Radionuklid von einem Mikroprozessor 44 gesetzt. Nur solche Summensignale AP der Summierstufe 42 führen folglich am Ausgang des Einkanaldiskriminators 43 zu einem Normimpuls (Zählimpuls N3) am Zählereingang des Mikroprozessors 44, welche innerhalb des durch die Schwellen S1 und S2 definierten Impulshöhenfensters liegen, und bei welchen gleichzeitig die Koinzidenzbedingung erfüllt ist (Koinzidenzimpuls K von der Koinzidenzstufe 41).

Nur wenn zur Identifizierung oder Unterscheidung verschiedener Radionuklide eine Impulshöhenanalyse erforderlich ist, werden alle zuvor beschriebenen Schaltungsteile mit Summierstufe 42 und Einkanaldiskriminator 43 benötigt.

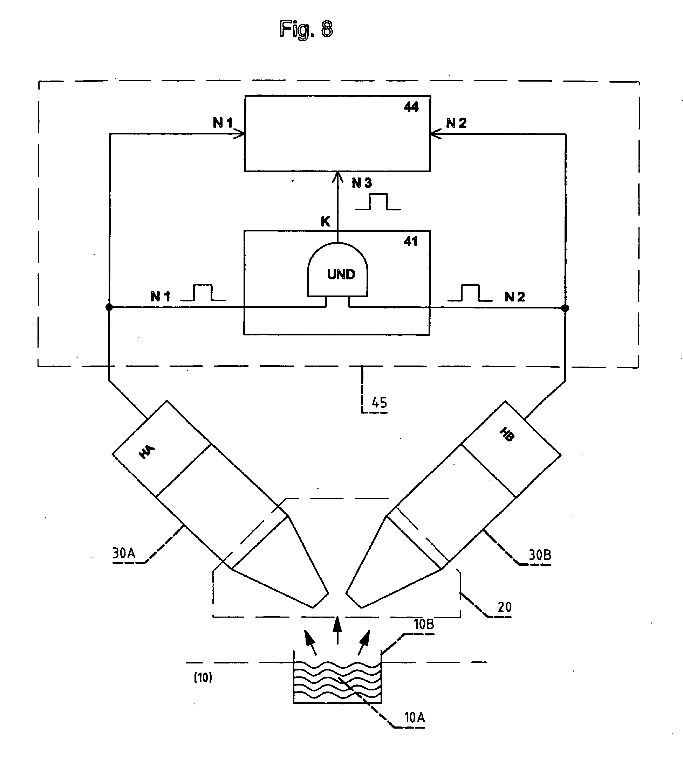

In einer besonders einfachen und kostensparenden Ausführungsform (Fig.8) werden die Koinzidenzimpulse K der Koinzidenzstufe 41 anstelle der Zählimpulse N3 direkt dem Zählereingang des Mikroprozessors 44 zugeführt. Auf die Summierstufe 42 und den Einkanaldiskriminator 43 zur Impulshöhenanalyse wird verzichtet. Man erhält hierbei die höchste Zählausbeute bei dennoch niedrigem Nulleffekt.

Die Normimpulse N1,N2 der beiden Photomultiplier werden darüber hinaus als Zählimpulse direkt je einem Zählereingang des Mikroprozessors 44 zugeführt und im Anwenderprogramm je nach Messaufgabe einzeln ausgewertet oder addiert.

Damit können als weitere Funktion auch Lumineszenzmessungen mit hoher Effizienz an Proben in Mikroplatten durchgeführt werden.

Auch können unterschiedliche optische Filter vor den Photokathoden angebracht werden, um z.B. Bio Resonance Energy Transfer (BRET) Messungen zu ermöglichen.

**Patentansprüche**

1. Vorrichtung zum Nachweis radioaktiver Strahlung aus Szintillationsmessungen, wobei Proben in definierten Aufnahmebereichen mit jeweils einer Austrittsöffnung (10B;110B) untergebracht sind, mit zwei über dem Aufnahmebereich einer Probe angeordneten, jeweils ein Eintrittsfenster (31A,31B) aufweisenden Photodetektoren, welche mit einer Auswerteschaltung (40) verbunden sind, die zumindest eine Koinzidenzstufe (41) und einen Zähler für die Koinzidenzsignale (K) der Koinzidenzstufe (41) beinhaltet, wobei die Austrittsöffnung des Aufnahmebereichs einer Probe vollständig von den Eintrittsfenstern der beiden Photodetektoren (30A,30B; 130A,130B) aus sichtbar ist und die Flächennormalen der Eintrittsfenster (A-A',B-B') der beiden Photodetektoren (30A,30B;130A,130B) gegenüber der Ebene der Aufnahmebereiche um einen Neigungswinkel (wa) geneigt sind oder die beiden Photodetektoren parallel zueinander angeordnet sind, **dadurch gekennzeichnet, dass** ein Reflektor (20,120) zwischen dem Aufnahmebereich der Probe und den beiden Photodetektoren (30A,30B;130A,130B) angeordnet ist, der zwei kegelförmige Kanäle (21A,21B; 121A,121B) zur optischen Verbindung vom Aufnahmebereich zu den Eintrittsfenstern (31A,31B) der beiden Photodetektoren aufweist, welche über dem Aufnahmebereich der Probe in einem im wesentlichen kreisförmigen oder elliptischen Photoneneintrittsfenster (20C) enden, wobei zwischen den Kanälen (21A,21B;121A, 121B) eine Trennwand (22,122B) verbleibt.

2. Vorrichtung nach Anspruch 1, **dadurch gekennzeichnet, dass** der Reflektor (20) ein Montageblock mit zwei Halteflanschen (22A,22B) zur Aufnahme des Endes der Photodetektoren (30A,30B) ist, in dessen Unterseite die beiden kegelförmigen Kanäle (21A,21B) in einem im wesentlichen kreisförmigen oder elliptischen Photoneneintrittsfenster (20C) enden.

3. Vorrichtung nach Anspruch 1, **dadurch gekennzeichnet, dass** die Photodetektoren Photomultiplier umfassen, die (30A,30B; 130A,130B) im Einzelphotonen-Zählmodus betrieben werden.

4. Vorrichtung nach Anspruch 3, **gekennzeichnet durch** ihre Verwendung für Lumineszenzmessungen.

5. Vorrichtung nach Anspruch 1, **dadurch gekennzeichnet, dass** die Auswerteschaltung (40) einen Einkanaldiskriminator (43) enthält, dessen Eingang mit dem Ausgang einer Summierstufe (42) für die Analogimpulse (A1,A2) der Photodetektoren, die Photomultiplier umfassen (30A,30B; 130A,130B) verbunden ist.

**Claims**

1. Device for detecting radioactive radiation from scintillation measurements, wherein samples are accommodated in defined accommodating regions each with an outlet opening (10B; 110B), said device having two photo detectors, which are disposed above the accommodating region of a sample, have in each case an inlet window (31A, 31 B) and are connected to an evaluation circuit (40) that includes at least one coincidence step (41) and a counter for the coincidence signals (K) of the coincidence step (41), wherein the outlet opening of the accommodating region of a sample is completely visible from the inlet windows of the two photo detectors (30A, 30B; 130A, 130B) and the surface normals of the inlet windows (A-A', B-B") of the two photo detectors (30A, 30B; 130A, 130B) are inclined relative to the plane of the accommodating regions by an angle of inclination (wa) or the two photo detectors are disposed parallel to one another, **characterized in that** a reflector (20, 120) is positioned between the accommodating region of the sample and the two photo detectors (30A, 30B; 130A, 130B), said reflector having two cone-shaped channels (21A, 21 B; 121A, 121B) to connect the accommodating region to the inlet windows (31A, 31 B) of the two photo detectors in an optical manner, said channels terminating above the accommodating region of the sample in a substantially circular or elliptical photon inlet window (20C), wherein a partition wall (22, 122B) remains between the channels (21A, 21 B; 121A, 121B).

2. Device according to Claim 1, **characterized in that** the reflector (20) is a mounting block with two retaining flanges (22A; 22B) for the accommodation of the end of the photo detectors (30A, 30B), the two cone-shaped channels (21A, 21B) terminating in a substantially circular or elliptical photon inlet window (20C) in the underside of said mounting block.

3. Device according to Claim 1, **characterized in that** the photo detectors comprise photomultipliers, which (30A, 30B; 130A, 130B) are operated in single photon counting mode.

4. Device according to Claim 3, **characterized by** its use for luminescence measurements.

5. Device according to Claim 1, **characterized in that** the evaluation circuit (40) includes a single channel discriminator (43), the input of which is connected to the output of a summation step (42) for the analog pulses (A1, A2) of the photo detectors, which comprise photomultipliers (30A, 30B; 130A, 130B).

**Revendications**

1. Dispositif pour la détection du rayonnement radioactif à partir de mesures de scintillation, des échantillons étant logés dans des zones d'enregistrement définies comprenant chacune un orifice de sortie (10B ; 110B), comprenant deux photodétecteurs agencés au-dessus de la zone d'enregistrement d'un échantillon et présentant chacun une fenêtre d'entrée (31A, 31B), lesquels photodétecteurs sont reliés à un circuit d'exploitation (40) qui comporte au moins un étage de coïncidence (41) et un compteur pour les signaux de coïncidence (K) de l'étage de coïncidence (41), l'orifice de sortie de la zone d'enregistrement d'un échantillon étant entièrement visible depuis les fenêtres d'entrée des deux photodétecteurs (30A, 30B ; 130A, 130B) et les normales à la surface des fenêtres d'entrée (A-A', B-B') des deux photodétecteurs (30A, 30B ; 130A, 130B) étant inclinées d'un angle d'inclinaison (wa) par rapport au plan de la zone d'enregistrement ou bien les deux photodétecteurs sont agencés parallèlement l'un à l'autre, **caractérisé en ce qu'**entre la zone d'enregistrement de l'échantillon et les deux photodétecteurs (30A, 30B ; 130A, 130B) est agencé un réflecteur (20, 120) qui présente, pour relier optiquement la zone d'enregistrement aux fenêtres d'entrée (31A, 31B) des deux photodétecteurs, deux canaux (21A, 21B ; 121A, 121B) de forme conique qui se terminent au-dessus de la zone d'enregistrement de l'échantillon en une fenêtre d'entrée de photons (20C) sensiblement circulaire ou elliptique, une cloison de séparation (22, 122B) subsistant entre les canaux (21A, 21B ; 121A, 121B).

2. Dispositif selon la revendication 1, **caractérisé en ce que** le réflecteur (20) est un bloc d'assemblage comprenant deux brides de maintien (22A, 22B) pour recevoir l'extrémité des photorécepteurs (30A, 30B), dans la face inférieure duquel les deux canaux (21A, 21B) de forme conique se terminent en une fenêtre d'entrée de photons (20C) sensiblement circulaire ou elliptique.

3. Dispositif selon la revendication 1, **caractérisé en ce que** les photodétecteurs comprennent des photomultiplicateurs qui (30A, 30B ; 130A, 130B) sont exploités dans le mode de comptage de photons individuels.

4. Dispositif selon la revendication 3, **caractérisé par** son utilisation pour des mesures de luminescence.

5. Dispositif selon la revendication 1, **caractérisé en ce que** le circuit d'exploitation (40) comporte un analyseur simple canal (43) dont l'entrée est reliée à la sortie d'un étage d'addition (42) pour les impulsions analogiques (A1, A2) des photodétecteurs, qui comprennent des photomultiplicateurs (30A, 30B ; 130A, 130B).

30B

30A

22A

22B

20

10

FIG.1

EP 1 729 148 B1

FIG.2

FIG.3

FIG.4

FIG. 5

Fig. 6A

## Fig. 7

Fig. 8

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5061853 A
- EP 0425767 A1
- US 5144136 A

**In der Beschreibung aufgeführte Nicht-Patentliteratur**

- **Muramatsu.** *Durch NUCLEAR INSTRUMENTS AND METHODS,* 1967, vol. 52, 148-152